# EUROPÄISCHE PATENTSCHRIFT

(11) **EP 4 552 789 B1**
(45) Veröffentlichungstag und Bekanntmachung des Hinweises auf die Patenterteilung: **28.01.2026**
(21) Anmeldenummer: 23208779.1
(22) Anmeldetag: 09.11.2023
(51) Int. Cl.: B23K 13/02

(54) **VORRICHTUNG ZUR FERTIGUNG VON GESCHLOSSENEN PROFILHALBZEUGEN MITTELS EINES WEICHMAGNET-POLYMER-KOMPOSIT-IMPEDERS**
DEVICE FOR THE PRODUCTION OF CLOSED SEMI-FINISHED PROFILES USING A SOFT MAGNET-POLYMER COMPOSITE IMPEDERS
DISPOSITIF POUR LA FABRICATION DE PRODUITS SEMI-FINIS À PROFIL FERMÉ À L'AIDE D'UN IMPÉDEUR COMPOSITE AIMANT DOUX-POLYMÈRE

(43) Veröffentlichungstag der Anmeldung: 14.05.2025
(73) Patentinhaber: Technische Universität Chemnitz, 09111 Chemnitz (DE); Tube Welding Tools Heinz-Dieter Teichert, 58802 Balve (DE)
(72) Erfinder: Kroll, Martin, 01099 Dresden (DE); Günther, Daniel, 09126 Chemnitz (DE); Fröhlich, Alexander, 09112 Chemnitz (DE); Kräusel, Verena, Chemnitz (DE); Teichert, Heinz-Dieter, 58802 Balve (DE)
(74) Vertreter: Rumrich, Gabriele

(56) Entgegenhaltungen:
- JP-A- H01 178 380
- US-A- 3 511 957
- MILICEVIC M S ET AL: "Impeder for HF inductive welding of steel tubes", IEE PROCEEDINGS: SCIENCE, MEASUREMENT AND TECHNOLOGY, IEE, STEVENAGE, HERTS, GB, vol. 149, no. 3, 3 May 2002 (2002-05-03), pages 113 - 116, XP006018107, ISSN: 1350-2344, DOI: 10.1049/IP-SMT:20020342

## Beschreibung

Die Erfindung betrifft eine Vorrichtung zur Fertigung von geschlossenen Profilhalbzeugen nach dem ersten Patentanspruch und wird für das induktive Längsnahtschweißen eingesetzt.

Die Mehrzahl der in Deutschland hergestellten Stahlrohre werden im Herstellungsprozess längsnahtgeschweißt. Die Herstellung von Rohren mit großen Stückzahlen erfolgt in der Regel kontinuierlich.

Die Verarbeitungsprozesskette besteht dabei im Wesentlichen aus der Coilzuführung, der Blecheinformung, der Blechkantenbearbeitung, dem Längsnahtschweißen, dem Kalibrieren, gegebenenfalls der Wärmebehandlung und dem Richten und Trennen. In einem derartigen Verfahren mit einer Vielzahl von Bearbeitungsstufen wird die Verarbeitungsgeschwindigkeit in der Regel vom Schweißprozess begrenzt.

Da das Hochfrequenz-Induktionsschweißen (HFI-Schweißen) hohe Schweißgeschwindigkeiten (bis 200 m/min) bei guter Energieeffizienz erlaubt, ist es das, bezogen auf die Ausbringungsmenge, am weitesten verbreitete Schweißverfahren. Eine kontinuierlich arbeitende Rohrfertigungsstraße, bestehend aus Abcoilanlage, Bandschweißanlage, Bandspeicher, Walzprofiliereinheiten, Bandkantenbearbeitungsanlage, Rohrlängsnahtschweißanlage, Wärmebehandlungsanlage, Richtgerüsten und fliegender Bandsäge ist mit hohen Investitionskosten verbunden. Signifikante Kosteneinsparungen für die Rohrhersteller können daher insbesondere über die Erhöhung der Verarbeitungsgeschwindigkeit und über die Reduzierung der Stillstandszeiten erfolgen. Das Verfahren ist insbesondere für die Fertigung von kleinen und mittelgroßen Rohren bis zu einem Durchmesser von ca. 60 mm und/oder dickwandige Rohre prädestiniert.

In den vergangenen beiden Jahrzehnten gab es primär auf der Seite der Energietransformation bedeutende Verbesserungen. So haben Weiterentwicklungen in der Leistungselektronik wie IGBT (Insulated-Gate Bipolar Transistor - bis ca. 400 kHz) und MOSFET-basierte Umrichter (Metal Oxide Semiconductor Field-Effect Transistors - bis ca. 2 MHz) die effiziente Erzeugung immer höherfrequenter Ströme ermöglicht. Hochfrequente Ströme erzeugen in einem Induktor hochfrequente elektromagnetische Felder. Diese induzieren Wirbelströme mit gleicher Frequenz f in elektrisch leitfähige Werkstoffe und führen zu einer lokalen Konzentration der Stromdichteverteilung und in Folge dessen zu einer lokalen Erwärmung des elektrisch leitfähigen Körpers durch Widerstandserwärmung. Diese leitfähigen Körper können beispielsweise metallische Stahlrohre sein. Eine lokal beschränkte Erwärmung des Rohres ist insbesondere bei modernen Stahlwerkstoffen wie Mehrphasen- oder niedriglegierten Feinkornstählen erforderlich, um den Bereich außerhalb der Schweißnaht nicht zu entfestigen. Für viele sicherheitsrelevante Anwendungen gilt daher eine Frequenz von f = 100 kHz als Untergrenze. Eine hohe Frequenz erhöht den Wirkungsgrad der Energieübertragung vom Induktor in die Rohrvorform, die lokale Erwärmung der Fügezone reduziert darüber hinaus Wärmeverluste. Weiterhin ist aufgrund des sog. Skin-Effektes bei geringen Wanddicken eine höhere Frequenz zu wählen, damit die Wärmeeinbringung auf die Fügezone beschränkt wird. Hochfrequente Ströme hingegen reduzieren die Wirksamkeit von konventionellen Ferrit-Impederkernen. Da Ferrite die derzeit dominierenden Werkstoffe für Impeder in der Rohrindustrie darstellen, besteht an dieser Stelle Verbesserungsbedarf.

Ein weiterer wesentlicher Einflussfaktor auf die Effizienz und die Realisierbarkeit von hohen Verarbeitungsgeschwindigkeiten ist die Reduzierung des Leckstroms, da der Leckstrom zu einer unerwünschten Erwärmung des Rohrumfanges führt. Hierfür werden die Impederkerne eingesetzt. Diese erhöhen den Widerstand des Strompfades entlang des Rohrrückens und führen zu einer Erhöhung des nutzbaren Spaltstromes. Rohre mit kleinen Durchmessern haben ein geringes Volumen im Inneren, das Volumen der Impederkerne muss damit ebenfalls klein sein. Dies erhöht die Anforderungen an die Effizienz des Impederkerns, insbesondere an die Sättigungsflussdichte. Derzeitige Rohrschweißanlagen arbeiten an der Grenze der Leistungsfähigkeit von konventionellen Ferrit-Impedern. Eine weitere Erhöhung der Verarbeitungsgeschwindigkeit ist nicht möglich, da diese eine Erhöhung der elektrischen Leistung erfordert. Dies würde primär den Leckstrom erhöhen, welcher zu einer Erwärmung des Rohrrückens führt und dort das Gefüge von modernen metallischen Werkstoffen zerstören sowie die Verarbeitbarkeit des überhitzten Rohrkörpers in den folgenden Bearbeitungsstufen Stauchung und Kalibrierung erschweren würde. Daher werden derzeit hohe Schweißgeschwindigkeiten von ≥ 70 m/min nur bei größeren Rohrdurchmessern ≥ 50 mm erreicht.

Im industriellen Rahmen werden Durchfluss-Impedersysteme vor allem für das HFI-Rohr- und Profilschweißen von Stählen verwendet. Der erzielbare Durchmesserbereich D liegt dabei bei Dₘᵢₙ= 10 mm bis Dₘₐₓ = 660 mm mit möglichen Wanddicken von sₘᵢₙ = 0,12 mm bis sₘₐₓ = 25 mm. Die Anwendung für beispielsweise Aluminium, Zink oder Messing ist ebenfalls möglich, wobei nicht für jeden Werkstoff Impeder zum Einsatz kommen.

Erzielbare Profilformen reichen von einfachen Rund- oder Rechteckprofilen bis hin zu komplexen Geometrien.

Um die Werkstoffeigenschaften ausnutzen zu können und eine hohe Prozesseffizienz zu gewährleisten, ist insbesondere beim HFI-Längsnahtschweißen von dünnwandigen Rohren eine möglichst hohe Arbeitsfrequenz anzustreben. Eine hohe Arbeitsfrequenz schränkt jedoch die Wirksamkeit von konventionellen Impedersystemen ein. Eine weitere Prozessgrenze besteht durch das einsetzbare Impedervolumen. Zur Erhöhung von Verarbeitungsgeschwindigkeiten und Effizienz können des Weiteren neue Impederwerkstoffe mit verbesserten elektromagnetischen Eigenschaften beitragen.

Impederkerne für das HFI-Rohrschweißen sind kommerziell in einer begrenzten Variation geometrischer Formen verfügbar, werkstofftechnisch jedoch immer weichmagnetische Ferrite. Diese sind elektrisch schlecht oder nichtleitende keramische Werkstoffe aus dem Eisenoxid (FeₓO_{y} und Derivate), die durch Sintern in die gewünschte Form gebracht werden. Ferrite sind sehr spröde und mit gewöhnlichen spanenden Verfahren sehr schwer zu bearbeiten. Daher müssen Ferrite durch Haltesysteme fixiert werden.

Aufgrund der schlechten Verarbeitbarkeit sind vom Kreisquerschnitt abweichende Geometrien problematisch. Bei Ausrüstungsherstellern und Endanwendern wird dies derzeit meist durch das Verkleben von mehreren kleineren Rundimpederkernen versucht zu lösen. Dabei stellt der nicht gekühlte und elektromagnetisch nicht wirksame Auffüll- und Klebebereich eine große Schwachstelle dar. Solche Impeder erreichen daher meist nur sehr kurze Standzeiten von wenigen Stunden. Die eingeschränkte Formenvielfalt und Bearbeitbarkeit der Ferrite hat ebenfalls negative Auswirkungen auf die Standzeiten von kreisrunden Impederkernen: Die Bandkanten der Rohrvorform zwischen Induktor und Schweißpunkt emittieren eine hohe Strahlungswärme. Ebenfalls in diesem Bereich können Schweißspritzer und Lichtbögen auftreten sowie sich Abbrand lösen. Von diesen unerwünschten Fehlerquellen wird der Ferritkern in der Regel für 2 Stunden bis zu einer Woche durch eine Hülle geschützt. Ist die Hülle verschlissen, setzen sich leitfähige Rohrwerkstoffreste auf dem elektrisch intrinsisch nicht leitfähigen Impederkern ab. Diese werden durch Wirbelströme erwärmt und zerstören so den Ferrit. Wird bei kreisrunden Impederkernen die Dicke der Schutzhülle vergrößert kann der Schutz länger aufrechterhalten werden. Jedoch wird damit auch das elektromagnetisch wirksame Impederkernvolumen über die gesamte Länge reduziert und damit der Prozess verschlechtert.

Die nachfolgenden Eigenschaften von Ferriten als Impederkern-Werkstoff werden aufgrund von fehlenden Alternativen seitens des Standes der Technik in Kauf genommen:
2 Die Sättigungsflussdichte ist relativ niedrig
   ∘ Begrenzung der magnetischen Energiedichte
   ∘ Begrenzung der Schweißgeschwindigkeit
2 Die Permeabilität ist sehr hoch
   ∘ hohe Konzentration der magnetischen Flussdichte in Randbereichen des Impederkerns
   ∘ Temperaturanstieg in randnahen Schichten des Ferritkerns
   ∘ Erhöhung der thermischen Verluste des Impederkerns
   ∘ Kaskadenartige Verschlechterung der Volumenleistung des Impederkerns
   ∘ Erhöhung des Leckstroms
   ∘ Verschlechterung des Gesamtprozesswirkungsgrades
   ∘ Begrenzung der Schweißgeschwindigkeit
2 spröder Werkstoffcharakter von Ferriten
   ∘ mechanische Bearbeitbarkeit von Ferriten stark begrenzt
   ∘ Verwendung von innenliegenden metallischen (CuZr, austenitische Stähle) Zugstäben zur Fixierung
   ∘ metallische Zugstäbe werden durch das EM-Feld erwärmt
   ∘ zusätzliche Erwärmung des Impederkerns
   ∘ Verschlechterung des Gesamtprozesswirkungsgrades
2 starke Temperaturabhängigkeit der magnetischen Eigenschaften
   ∘ oberflächennahe Kühlkanäle schwer fertigbar + partielle Schutzelemente nicht platzierbar
   ∘ Verwendung von Außenhüllen zur Wasserkühlung der Oberfläche von Ferritkernen
   ∘ Vergrößerung Abstand Impederkern - Rohrinnenwand
   ∘ Erhöhung des Leckstroms
   ∘ Verschlechterung des Gesamtprozesswirkungsgrades

Aus dem Stand der Technik zeigt sich, dass der Impederkern eine kritische Komponente in einer Rohrfertigungsstraße ist. Ferrite sind derzeit die dominierenden Impederkernwerkstoffe. Diese besitzen jedoch große Nachteile hinsichtlich Sättigungsflussdichte, Permeabilität, mechanischer Bearbeitbarkeit und der Temperatursensitivität der elektromagnetischen Eigenschaften. Negativ wirken sich diese Eigenschaften insbesondere bei kleinen und mittleren Rohrdurchmessern aus, wo das Impederkernvolumen beschränkt ist.

Impedersysteme sind wirtschaftlich gesehen hoch relevante Anlagenkomponenten in HFI-Rohrschweißstraßen.

Der innenliegende Ferrit-Impeder, welcher noch heute Stand der Technik und Referenzlösung ist, ist aus der Druckschrift US 3,037,105 A bekannt. Die Ausführung des Impederkerns aus Dynamoblechen als alternative Werkstoffvariante wird in der Druckschrift US 4,596,913 A beschrieben. Die Kühlung eines Impederkerns mittels Rückflusses ist aus der Druckschrift US 4,443,677 A bekannt.

Ein außenliegender Impeder aus weichmagnetischen Kompositen ist aus der Druckschrift US 2008/0308550 A1 bekannt.

Für industrielle Bereiche wie das Induktionshärten wurden zur Feldführung und Bündelung von elektromagnetischen Feldern Weichmagnet-Polymer-Komposite entwickelt. Diese Verbundmaterialien bestehen aus elektrisch isolierten Weichmagnet-Partikeln und temperaturbeständigen Polymeren wie PTFE als Matrixwerkstoff. Im Herstellungsprozess werden die Partikel mit den Polymeren verpresst, sodass eine hohe Partikelpackungsdichte sowie eine homogene Partikelverteilung erreicht wird. Primäre Anwendungsgebiete sind das induktive Härten oder Erwärmungsaufgaben in der Verpackungs- oder Automobilindustrie.

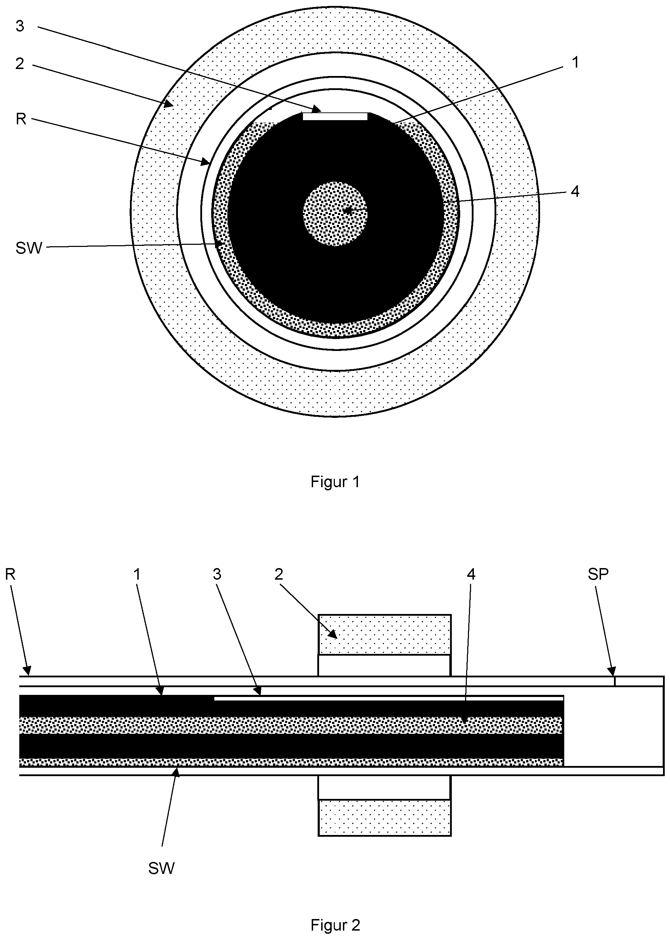

Der Polymer-Matrixwerkstoff verbessert damit die mechanischen Eigenschaften des Komposites im Vergleich zum keramischen Ferrit in der Art, dass die mechanische Bearbeitbarkeit des Werkstoffes durch Fräsen, Drehen und Bohren gegeben ist. Polymere wie PTFE sind sehr gute elektrische Isolatoren. Dies ist vorteilhaft, da in Feldführungselementen wie Impederkernen die Entstehung von Wirbelströmen vermieden werden muss. Diese würden zur Zerstörung des Bauteils durch direkte Joul'sche Erwärmung führen. Weiterhin besitzen Polymere wie PTFE ausgezeichnete chemische Beständigkeiten. Dies ist erforderlich, da im Prozess dauerhaft Kühl-Schmiermittel sowie diverse Schmieröle und -fette zum Einsatz kommen (Abbildung 1). Als temperaturstabiler Kunststoff kann er bei Temperaturen von bis zu 250 °C, kurzzeitig auch bis 300 °C eingesetzt werden. Diese Temperaturlimits liegen jedoch deutlich unter denen keramischer Ferrite. Thermisch nachteilig ist darüber hinaus die geringe thermische Leitfähigkeit von PTFE (0,24 W/(m·K)) bzw. WMPK (0,04 ... 0,06 W/(m·K) sowie die hohe Verlustleistung der WMPK (PV ∼ 50 ... 65 W/cm³). Daher müssen Impederkerne aus WMPK speziell vor Schweißspritzern bzw. Schmelztopfen oder Lichtbögen geschützt werden. Die thermische Zersetzung des Impederkerns stellt ein wesentliches technisches Risiko für die Entwicklung eines Impedersystems mit einer industriell nutzbaren Standzeit dar.

Der Einsatz von Weichmagnet-Polymer-Kompositen für das induktive Rohrlängsnahtschweißen ist aus den Veröffentlichungen von M. S. Milicevic and V. M. Milicevic, "Impeder for HF inductive welding of steel tubes," IEE Proceedings-Science, Meas. Technol., vol. 149, no. 3, pp. 113-116, 2002" und "Quality Improvement of Steel Pipes Produced by Seam Welding with New Magneto-Dielectric Impeder," Mater. Trans., vol. 47, no. 6, pp. 1464-1468, 2006, doi: 10.2320/matertrans.47.1464" bekannt. Dabei wurden durch den Einsatz von zu dieser Zeit verfügbaren Kompositen Energieeinsparungen i. H. v. 45 % an Rohren mit Durchmessern von 21,3 mm (Wanddicke s = 2,65 mm) und 26,9 mm (Wanddicke s = 2,5 mm) erreicht und eine mögliche Erhöhung der Verarbeitungsgeschwindigkeit um 90 % prognostiziert. Auch konnte durch den Einsatz eines WMPK-Impeders ein vergleichsweise sehr feinkörniges Gefüge in der Schweißnaht erzielt werden. Eine kommerzielle Verwendung ist von WMPK-Impedern bisher nicht bekannt. Dies hat mehrere Ursachen, wobei zum einen die Geometrien der Ferrit-Impeder für die WMPK-Impeder übernommen wurden, ohne Anpassungen vorzunehmen. Zum anderen fehlten speziellen Lösungen zur Kühlung und zum Schutz der schlecht thermisch leitfähigen Komposite. Diese können zu einer kurzen Einsatzdauer durch Überhitzung oder Zerstörung der Impederkerne führen. Seit den Untersuchungen von Milicevic sind weiterhin optimierte Werkstoffe verfügbar, welche hinsichtlich der Eignung als Impederkern verbesserte Werkstoffeigenschaften aufweisen.

Aufgabe der Erfindung ist es, eine Vorrichtung zur Fertigung von geschlossenen Profilhalbzeugen zu entwickeln, wobei durch den Einsatz eines Impederkerns, beispielsweise aus Kompositen aus Weichmagneten und Polymeren als Impederkernwerkstoff im HFI-Rohrschweißen eine Verbesserung des Prozesses aus wirtschaftlicher und technischer Sicht angestrebt wird. Eine Verringerung der Fertigungskosten kann durch die Erhöhung der Schweißgeschwindigkeit und damit einhergehend durch die verbesserte Anlagenausnutzung realisiert werden. Ein weiteres Ziel ist die Verringerung des Energieverbrauchs im Gesamtprozess, wodurch zeitgleich die Fertigungskosten sinken und die ökologische Bilanz des Prozesses verbessert wird. Ein konzentrierter Energieeintrag in die Schweißnaht reduziert weiterhin die Nahtüberhöhung und das Volumen der Schweißwulst. Damit kann in einigen Anwendungsfällen eine folgende Nahtbearbeitung, z. B. durch Nahtentfernung oder Nahtrollen, entfallen. Weiterführend soll die Qualität der Schweißnaht sowie die mechanischen Eigenschaften des Rohres, insb. hinsichtlich maximaler Aufhärtung, Duktilität und aus Prozessunstetigkeiten entstehenden Fehlstellen, erhöht werden. Aufgabe der Erfindung ist es darüber hinaus die Standzeit des Impedersystems zu erhöhen, welche, aufgrund notwendiger Werkzeugwechsel, mit einer Verkürzung der Stillstandzeit der gesamten Rohrfertigungsanlage und einer Kostenreduzierung des Gesamtprozesses einhergeht.

Diese Aufgabe wird mit den Merkmalen des ersten Patentanspruchs gelöst.

Vorteilhafte Ausgestaltungen ergeben sich aus den Unteransprüchen.

Die Erfindung betrifft eine Vorrichtung zur Fertigung von geschlossenen Profilhalbzeugen mittels induktiven Längsnahtschweißen, aufweisend einen Impederkern und einen Induktor, der in ein Profilhalbzeug einführbar ist und wobei der Induktor das Profilhalbzeug zumindest bereichsweise während des Fügeprozesses umhüllt und eine Fügezone am Profilhalbzeug bildet, wobei erfindungsgemäß der Impederkern aus einem Weichmagnet-Polymer-Komposit besteht und keine, den Impederkern umhüllende Schutzhülle aufweist, wobei in Richtung der Fügezone weisend auf der Oberseite des Impederkerns eine Schutzkomponente angeordnet ist.

Die Schutzkomponente ist somit erfindungsgemäß an dem Impederkern nur partiell in dem Bereich bzw. der Region der Fügezone angeordnet.

Dabei umhüllt bzw. umschließt die Schutzkomponente den Impederkern nicht.

Dadurch wird Material für die Schutzkomponente eingespart und das Werkzeug - der Impeder - , bestehend aus Impederkern und Schutzkomponente einfacher und preiswerter herstellbar.

Es ist weiterhin möglich, die Standzeiten zu verlängern und dadurch das gesamte Verfahren kostengünstiger zu gestalten.

Um den Impeder gegen Spritzer und die daraus resultierende Überhitzung zu schützen werden in industriellen Rohrschweißanlangen den Impeder vollständig umgebende Schutzhüllen eingesetzt. Diese verringern jedoch das mögliche zu verwendende Impedervolumen und demnach auch den Wirkungsgrad des Prozesses. Gemäß der Erfindung werden gezielt an den kritischen Stellen des Impeders Schutzkomponenten angebracht und schützen somit den Impeder bei nur minimal verringertem Wirkvolumen.

Die Schutzkomponente ist bevorzugt plattenförmig oder als Segment eines Hohlzylinders ausgebildet.

Besonders bevorzugt ist die Schutzkomponente in oder an einem korrespondierenden Formelement des Impederkerns angeordnet. Das Formelement kann als Nut oder Abflachung ausgebildet sein.

In einer vorteilhaften Ausgestaltung ist die Schutzkomponente direkt an einem äußeren Ende des Impederkerns positioniert und erstreckt sich zumindest bereichsweise entlang des Impederkerns und parallel zu dessen Längsachse.

Die Schutzkomponente ist in einer bevorzugten Ausgestaltung lediglich auf der Impederoberseite angebracht und kann in einer weiteren Ausgestaltung aus einer oder mehreren Bauteilen bestehen.

Die Schutzkomponente weist eine hohe Temperaturbeständigkeit (Schmelztemperatur > 800 °C) auf und kann z.B. aus Aluminiumoxid Al₂O₃ ausgeführt sein, welche sich vor allem durch eine gute Verschleißbeständigkeit und ein relativ geringes Kostenniveau auszeichnen.

Des Weiteren kann die eine oder mehrere Schutzkomponenten als flache Halbzeuge oder als Profilbauteile ausgeführt sein.

Die Länge der Schutzkomponente ist von dem jeweiligen Anwendungsfall abhängig, wobei die Schutzkomponente beispielsweise nur unmittelbar am Schweißpunkt angeordnet ist oder sich bis auf die gesamte Länge des Impederkerns erstreckt.

Der Impederkern kann aus einem einzelnen Impederkern-Element oder einem segmentierten mehrteiligen Impederkern und zumindest teilweise aus einem Komposit aus weichmagnetischen Werkstoffen in Form von Partikeln oder Plättchen und eines oder mehrerer Polymere bestehen.

Eine bevorzugte Variante des Impederkerns weist wenigstens eine durchgehende Kühlbohrung auf, die von einem flüssigen oder gasförmigen Kühlmedium durchströmbar ist.

Besonders bevorzugt wird der Impederkern mittels zwischen dem Rohr und dem Impederkern angeordnetem Kühlmedium gekühlt.

Der Impederkern kann als Durchflussimpeder oder als Rückflussimpeder ausgestaltet sein derart, dass als Durchflussimpeder ein Kühlmedium außen und/oder innen entlang des Impederkerns in Prozessrichtung geführt wird.

Bei einer Ausgestaltung als Rückflussimpedersystem wird das Kühlmedium entlang der Außenseite in Prozessrichtung geführt und durch das Innere des Impederkerns zurückgeführt. Alternativ wird das Kühlmedium durch das Innere des Impederkerns in Prozessrichtung geführt und entlang der Außenseite zurückgeführt.

Unter Nutzung einer Kühlung durch das außerhalb des Impederkerns befindliche Kühlmedium erfolgt die Wärmeableitung bevorzugt primär in dieses Kühlmedium, wobei das Kühlmedium besonders bevorzugt bis zur Höhe der Schutzkomponente reicht.

In einer vorteilhaften Ausgestaltung weist die Vorrichtung Mittel zur Verstellung des Neigungswinkels α der Impederkern-Achse bezogen auf die Längsachse des Profilhalbzeugs auf.

Besonders bevorzugt sind die wesentlichen Außenabmessungen des Impederkerns derart ausgestaltet, dass der Impederkern einen Abstand von s ≤ 2 mm bevorzugt s ≤ 1 mm zu den Innenabmessungen der Profilhalbzeuge für Profilhalbzeuge mit Innenabmessungen unter 30 mm und einen Abstand von s ≤ 3 mm, bevorzugt s ≤ 2 mm zu den Innenabmessungen der Profilhalbzeuge für Profilhalbzeuge mit Innenabmessungen über 30 mm auf im Bereich eines Schweißpunktes am Profilhalbzeug aufweist.

Der Begriff Innenabmessung entspricht dabei dem durchschnittlichen Innendurchmesser d bei Profilhalbzeugen, insbesondere Rohren und bei Profilen mit dem Abstand dₓ der jeweiligen gegenüberliegenden Seiten der Innengeometrie.

Die Profilhalbzeuge umfassen Rohre oder geschlossene Profile. Geschlossene Profile können beispielsweise rechteckige Kastenprofile oder komplex geformte Profilgeometrien sein.

Die Profilhalbzeuge sind bevorzugt aus Stählen, Aluminium und Aluminiumlegierungen, Nickel und Nickellegierungen, Kupfer und Kupferlegierungen oder weiteren metallischen Werkstoffen sowie deren Kombinationen gefertigt.

Die erfindungsgemäße Vorrichtung besitz erstmalig keine umlaufende Schutzhülle. Der Wegfall der umlaufenden Impederschutzhülle ermöglicht die Erhöhung des Durchmessers des Impederkerns, wodurch sich der Wirkungsgrad erhöht.

Zum Schutz des Impederkerns kommt erstmalig, statt einer umlaufenden Schutzhülle, eine lediglich partiell im Bereich der Fügezone angeordnete bevorzugt keramische Schutzkomponente zum Einsatz.

Das Ersetzen einer Impederschutzhülle durch eine keramische Schutzkomponente ermöglicht eine Vergrößerung des Impedervolumens. Dies hat eine Verbesserung des Wirkungsgrades zur Folge, wodurch eine Vergrößerung der Schweißgeschwindigkeit erzielt werden kann und/oder eine Reduzierung der Schweißleistung möglich ist.

Durch den Einsatz von Weichmagnet-Polymer-Kompositen kann eine Erhöhung der Sättigungsflussdichten im Impeder auf mehr als Bₛₐₜ ≥ 900 mT und daraus resultierend auch eine Steigerung der Effizienz des Systems erreicht werden. Vergleichbare Konkurrenzverfahren haben eine Sättigungsflussdichte von Bₛₐₜ ≥ 500 mT.

Die angestrebte Verringerung des Energieverbrauchs lässt sich ebenfalls durch die Werkstoffeigenschaften der Weichmagnet-Polymer-Komposite und der damit einhergehenden Verbesserung der Effizienz begründen. Die elektrische Leistung Pₑₗ am Generator bei konstanter Vorschubgeschwindigkeit hat dabei eine Reduzierung der elektrischen Leistung Pₑₗ gegenüber der notwendigen elektrischen Leistung Pₑₗ* von Konkurrenzverfahren ergeben.

So kann in einem Ausführungsbeispiel beim Schweißen ferritischer Stahlrohre der Dimension eines Außendurchmessers x Wanddicke von D12 x 1,15 mm mit einer Fertigungsgeschwindigkeit von 75 m/min der Abstand des Impederkernes zur Rohrinnenwand auf ca. 1 mm reduziert werden. Im Vergleich zur notwendigen Generatorleistung von Pₑₗ = 58 kW, in einem konventionellen Aufbau gemäß dem Stand der Technik, kann diese, durch die Verwendung des optimierten Impeders, auf bis zu Pₑₗ = 33 kW reduziert werden. Dies entspricht einer prozentualen Energieeinsparung von ca. 43%.

Auch die Standzeiten können mit der erfindungsgemäßen Lösung vergrößert werden, wobei die Standzeit des Impeders der erfindungsgemäßen Vorrichtung tₛ ≥ 24 h erreichen soll. Konkurrenzverfahren erzielen in der Regel Standzeiten von tₛ* = 4 - 24 h.

Es findet ein induktives Hochfrequenz-, Mittelfrequenz- oder Mehrfrequenz-Längsnahtschweißen Anwendung.

Die Erfindung wird nachfolgend an einem Ausführungsbeispiel und zugehörigen Zeichnungen näher erläutert.

Es zeigen:
- Figur 1: eine Schnittdarstellung im Rohrquerschnitt durch eine erfindungsgemäße Vorrichtung,
- Figur 2: eine Schnittdarstellung der Seitenansicht der gemäß Figur 1 dargestellten Vorrichtung,
- Figur 3: das Verhältnis der Abmessungen eines Impederkerns ohne Schutzkomponente und eines Profilhalbzeugs,
- Figur 4: eine Neigungswinkelverstellung des Impederkerns ohne Schutzkomponente im Profilhalbzeug,
- Figur 5: eine Neigung der Schutzkomponente im Bezug zur Impederkern-Achse.

Die Figuren 1 und 2 zeigen ein Ausführungsbeispiel für eine Vorrichtung für das Schweißen von rohrförmigen Profilhalbzeugen R, wobei dies mittels induktivem Hochfrequenz-, Mittelfrequenz- oder Mehrfrequenz-Längsnahtschweißen erfolgt und mit den beschriebenen erfindungsgemäßen Komponenten aufgebaut ist. Die Vorrichtung weist einen Impederkern 1 und einen Induktor 2 auf. Die im Ausführungsbeispiel dargestellten Profilhalbzeuge/Rohre R bestehen bevorzugt aus einem konventionellen Kohlenstoffstahl. Der Induktor 2 ist vor dem nicht dargestellten Stauchrollenmittelpunkt positioniert.

Das Impedersystem besitzt keine umlaufende Schutzhülle. Der Wegfall der umlaufenden Impederschutzhülle ermöglicht die Erhöhung des Durchmessers des Impederkerns.

Zum Schutz des Impederkerns kommt, statt einer umlaufenden Schutzhülle, eine keramische Schutzkomponente 3 zum Einsatz. Diese Schutzkomponente 3 ist als Keramikplatte ausgeführt, sodass diese den gesamten Bereich unter dem Induktor 2 bis hin zum Schweißpunkt SP (siehe Figur 2) gegen Spritzer schützt. Die keramische Schutzkomponente 3 besitzt im Ausführungsbeispiel eine Länge von I_{Keramik} = 80 mm und eine Dicke von s_{Keramik} = 1 mm. Im Anwendungsbeispiel wird in den Impederkern eine Nut durch Fräsen eingearbeitet und die keramische Komponente eingeklebt. Die Keramik ist direkt am Impederausgang, d.h. dem Ende, an dem der Schweißvorgang stattfindet, positioniert. Damit wird der kritische Bereich des Induktors vollständig durchlaufen. Dieser kritische Bereich ist einer hohen Flussdichte und entsprechend der Übersättigungsgefahr sowie einer besonders intensiven Impedererwärmung ausgesetzt. Weiterhin ist der Impederkern im kritischen Bereich der Gefahr von Schweißspritzern ausgesetzt. Die keramische Komponente schützt den Impederkern im kritischen Bereich vor direktem Kontakt mit Schweißspritzern, durch Wärmeableitung und durch eine Reduzierung des Materialvolumens im für intrinsische Erwärmung besonders exponierten Bereich.

Der Impederkern ist als Zylinder, beispielsweise mit oder ohne Kühllamellen bzw. Kühlnuten auf der Außenhülle, ausgeführt (Kühllamellen oder Kühlnuten sind nicht dargestellt) und kann zur Kühlung eine durchgehende Innenbohrung 4 zur Kühlwasserzufuhr aufweisen. Das reduziert den Fertigungsaufwand und erhöht das Impederkernvolumen im besonders relevanten Randbereich. Alternativ kann die Innenkühlung in einer nicht dargestellten Ausgestaltungsform durch mehrere Kühlbohrungen erfolgen. Jedoch ist auch ein Aufbau eines Impederkerns mit Kühllamellen und/oder Kühlnuten (nicht dargestellt) auf der Außenhülle möglich.

Im Anwendungsbeispiel hat diese Innenbohrung einen Durchmesser von beispielsweise 3 mm. Die Kühlbohrung wird durch ein Kühlmedium durchflossen. Die Kühlbohrung erlaubt die definierte Zuführung von Kühlmedien und damit die effektive und überwachbare Kühlung im Impederkerninneren. Dort sind die erfindungsgemäßen Werkstoffe, aufgrund der verhältnismäßig geringen Wärmeleitfähigkeit, durch Überhitzung gefährdet.

Eine derartige Ausgestaltung kann für größere Impederdurchmesser vorteilhaft sein. Weiterhin wird die Kühlung der Außenseite des Impederkerns 1 durch ein Kühlmedium SW zwischen dem Impederkern 1 und dem Profilhalbzeug R, welches durch zusätzliches "Fluten" des Profilhalbzeugs R zugeführt wird, gem. Figur 1 und 2 gewährleistet. Ein derartiges Fluten erfolgt mittels zugegebenem Schleppwassers SW.

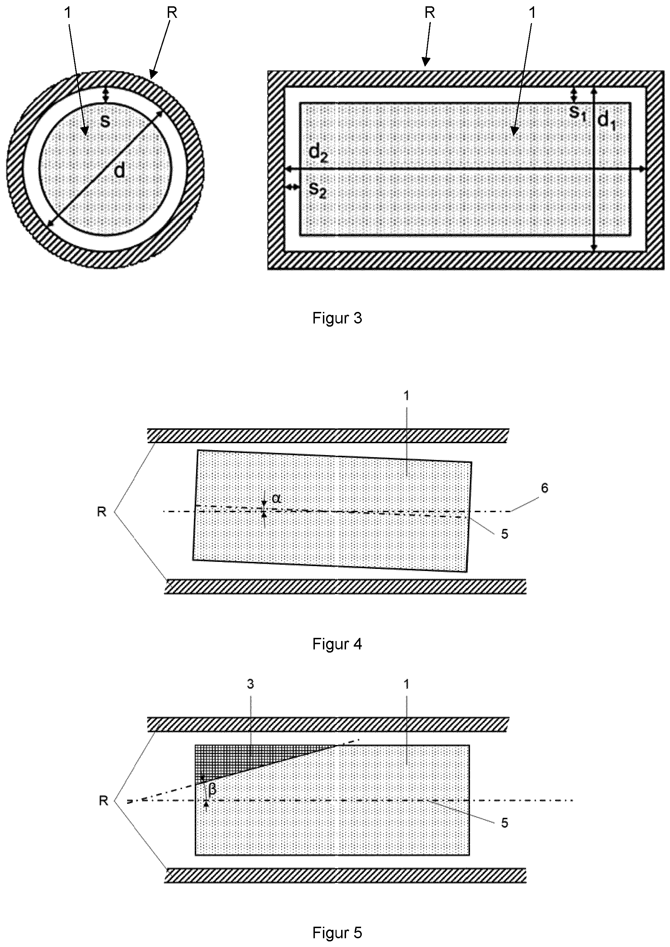

Figur 3 zeigt das Verhältnis der Abmessungen des Impederkerns 1 und des Profilhalbzeugs R. Die wesentlichen Außenabmessungen des Impederkerns 1 weisen einen Abstand von s zu dem Innendurchmesser d eines runden Profilhalbzeugs R, hier ein Rohr mit rundem Querschnitt, auf. Der Abstand s ≤ 2 mm gilt für Innenabmessungen unter 30 mm. Ein Abstand s ≤ 3 mm zu dem Innendurchmesser der Profilhalbzeuge R gilt für Profilhalbzeuge R mit Innenabmessungen über 30 mm.

Bei einer rechteckigen Ausgestaltung des Profilhalbzeugs R mit einer Innenlänge d₁ und d₂ ist der entsprechende Abstand s₁, s₂ zwischen Impederkern 1 und Innenwand des Profilhalbzeugs R entsprechend dem Abstand s zu wählen.

Eine Neigungsverstellung ist in der Figur 4 dargestellt. Dafür weist die Vorrichtung Mittel auf, um die Längsachse 5 des Impederkerns 1 in Bezug auf die Längsachse 6 des Profilhalbzeugs R um den Winkel α auszulenken.

Eine geneigte Anordnung einer Impederschutzkomponente 3 um den Winkel β bezogen auf die Impederkern-Achse 5 ist in der Figur 5 dargestellt.

Die Erfindung ermöglicht die Realisierung eines hochwirtschaftlichen induktiven Längsnahtschweißens von einlagigen Blechen oder metallurgisch plattierten Blechen zur Herstellung von ein- oder mehrlagigen Stahlrohren.

### Bezugszeichenliste

- 1: Impederkern
- 2: Induktor
- 3: Schutzkomponente
- 4: Bohrung
- 5: Längsachse des Impederkerns
- 6: Längsachse des Profilhalbzeuges

- R: Profilhalbzeug/Rohr
- SW: Kühlmedium/Schleppwasser
- I_{Keramik}: Länge
- s_{Keramik}: Dicke
- s: Abstand
- d: Innendurchmesser
- d₁, d₂: Innenlänge
- s1, s2: Abstand bei Innenlänge d1, d2
- α: Winkel
- β: Winkel

## Patentansprüche

1. Vorrichtung zur Fertigung von geschlossenen Profilhalbzeugen mittels induktivem Längsnahtschweißen, aufweisend einen Impederkern (1), der in ein Profilhalbzeug (R) einführbar ist, und einen Induktor (2), der das Profilhalbzeug (R) zumindest bereichsweise während dem Fügeprozess umhüllt und eine Fügezone am Profilhalbzeug (R) bildet, wobei der Impederkern (1) aus einem Weichmagnet-Polymer-Komposit besteht, **dadurch gekennzeichnet, dass** die Vorrichtung keine, den Impederkern (1) umhüllende Schutzhülle aufweist, wobei zumindest auf der in Richtung der Fügezone weisenden Seite des Impederkerns (1) eine Schutzkomponente (3) angeordnet ist.

2. Vorrichtung nach Anspruch 1, **dadurch gekennzeichnet, dass** die Schutzkomponente (3) plattenförmig, als mindestens ein plattenförmiges Segment und/oder als mindestens ein Segment eines Hohlzylinders ausgebildet ist.

3. Vorrichtung nach Anspruch 1 oder 2, **dadurch gekennzeichnet, dass** die Schutzkomponente (3) in oder an einem korrespondierenden Formelement des Impederkerns (1) angeordnet ist.

4. Vorrichtung nach einem der vorangegangenen Ansprüche, **dadurch gekennzeichnet, dass** die Schutzkomponente (3) direkt an einem äußeren Ende des Impederkerns (1) positioniert ist und sich zumindest bereichsweise entlang des Impederkerns (1) und parallel oder in einem Winkel (β) zu dessen Längsachse (5) erstreckt.

5. Vorrichtung nach einem der vorangegangenen Ansprüche, **dadurch gekennzeichnet, dass** der Impederkern (1) aus einem einzelnen Impederkern-Element oder einem segmentierten mehrteiligen Impederkern (1) besteht.

6. Vorrichtung nach einem der vorangegangenen Ansprüche, **dadurch gekennzeichnet, dass** die Schutzkomponente (3) aus einem oder mehreren Bauteilen besteht.

7. Vorrichtung nach einem der vorangegangenen Ansprüche, **dadurch gekennzeichnet, dass** der Impederkern (1) zumindest teilweise aus einem Komposit aus weichmagnetischen Werkstoffen in Form von Partikeln oder Plättchen und eines oder mehrerer Polymere besteht.

8. Vorrichtung nach einem der vorangegangenen Ansprüche, **dadurch gekennzeichnet, dass** der Impederkern (1) wenigstens eine durchgehende Kühlbohrung (4) aufweist, die von einem flüssigen oder gasförmigen Kühlmedium durchströmbar ist.

9. Vorrichtung nach Anspruch 7, **dadurch gekennzeichnet, dass** der Impederkern (1) mittels zwischen dem Profilhalbzeug (R) und dem Impederkern (1) angeordnetem Kühlmedium kühlbar ist, wobei der Impederkern (1) als Durchflussimpeder oder als Rückflussimpeder ausgestaltet ist derart, dass als Durchflussimpeder ein Kühlmedium außen und/oder innen entlang des Impederkerns (1) in Prozessrichtung geführt wird und in Form des Rückflussimpedersystems ein Kühlmedium entlang der Außenseite in Prozessrichtung geführt und durch das Innere des Impederkerns (1) zurückgeführt oder durch das Innere des Impederkerns (1) in Prozessrichtung geführt und entlang der Außenseite zurückgeführt wird.

10. Vorrichtung nach einem der vorangegangenen Ansprüche, **dadurch gekennzeichnet, dass** die Vorrichtung Mittel zur Verstellung des Neigungswinkels α des Impederkerns (1) bezogen auf die Längsachse (6) des Profilhalbzeugs (R) aufweist.

11. Vorrichtung nach einem der vorangegangenen Ansprüche, **dadurch gekennzeichnet, dass** durch das Fehlen der Schutzhülle das Impederkernvolumen vergrößert ist, wobei die wesentlichen Außenabmessungen des Impederkerns (1) einen Abstand von s ≤ 2 mm zu den Innenabmessungen der Profilhalbzeuge (R) für Profilhalbzeuge (R) mit Innenabmessungen unter 30 mm und einen Abstand von s ≤ 3 mm zu den Innenabmessungen der Profilhalbzeuge (R) für Profilhalbzeuge (R) mit Innenabmessungen über 30 mm (R) aufweisen.

## Claims

1. Device for manufacturing closed semi-finished profile products by means of inductive longitudinal seam welding, comprising an impeder core (1) which can be inserted into a semi-finished profile product (R), and an inductor (2) which surrounds the semi-finished profile product (R) at least in some regions during the joining process and forms a joining zone on the semi-finished profile product (R), wherein the impeder core (1) consists of a soft magnetic polymer composite, **characterized in that** the device has no protective cover surrounding the impeder core (1), wherein a protective component (3) is arranged at least on the side of the impeder core (1) facing the joining zone.

2. Device according to claim 1, **characterized in that** the protective component (3) is plate-shaped, designed as at least one plate-shaped segment and/or as at least one segment of a hollow cylinder.

3. Device according to claim 1 or 2, **characterized in that** the protective component (3) is arranged in or on a corresponding form element of the impeder core (1).

4. Device according to one of the preceding claims, **characterized in that** the protective component (3) is positioned directly at an outer end of the impeder core (1) and extends at least in some regions along the impeder core (1) and parallel or at an angle (ß) to its longitudinal axis (5).

5. Device according to one of the preceding claims, **characterized in that** the impeder core (1) consists of a single impeder core element or a segmented multi-part impeder core (1).

6. Device according to one of the preceding claims, **characterized in that** the protective component (3) consists of one or more components.

7. Device according to one of the preceding claims, **characterized in that** the impeder core (1) consists at least partially of a composite of soft magnetic materials in the form of particles or platelets and one or more polymers.

8. Device according to one of the preceding claims, **characterized in that** the impeder core (1) has at least one continuous cooling bore (4) through which a liquid or gaseous cooling medium can flow.

9. Device according to claim 7, **characterized in that** the impeder core (1) can be cooled by means of a cooling medium arranged between the semi-finished profile product (R) and the impeder core (1), wherein the impeder core (1) is designed as a flow impeder or as a return flow impeder in such a way that, as a flow impeder, a cooling medium is guided on the outside and/or inside along the impeder core (1) in the process direction, and, in the form of the backflow impeder system, a cooling medium is guided along the outside in the process direction and returned through the interior of the impeder core (1) or guided through the interior of the impeder core (1) in the process direction and returned along the outside.

10. Device according to one of the preceding claims, **characterized in that** the device has means for adjusting the angle of inclination α of the impeder core (1) relative to the longitudinal axis (6) of the semi-finished profile product (R).

11. Device according to one of the preceding claims, **characterized in that** the absence of the protective cover increases the impeder core volume, wherein the essential outer dimensions of the impeder core (1) have a distance of s ≤ 2 mm from the internal dimensions of the semi-finished profile product (R) for semi-finished profile products (R) with internal dimensions of less than 30 mm and a distance of s ≤ 3 mm from the internal dimensions of the semi-finished profile product (R) for semi-finished profile products (R) with internal dimensions of more than 30 mm (R).

## Revendications

1. Dispositif pour la fabrication de profilés semi-finis au moyen d'un soudage longitudinal par induction, comportant un impédeur (1) qui peut être introduit dans un profilé semi-fini (R) et un inducteur (2) qui enveloppe au moins par zones le profilé semi-fini (R) pendant le processus d'assemblage et forme une zone d'assemblage sur le profilé semi-fini (R), dans lequel l'impédeur (1) se compose d'un composite d'aimant doux et de polymère, **caractérisé en ce que** le dispositif ne présente pas d'enveloppe de protection enveloppant l'impédeur (1) tandis qu'un composant de protection (3) est disposé au moins sur le côté de l'impédeur (1) tourné en direction de la zone d'assemblage.

2. Dispositif selon la revendication 1, **caractérisé en ce que** le composant de protection (3) est conçu en forme de plaque, comme au moins un segment en forme de plaque et/ou comme au moins un segment d'un cylindre creux.

3. Dispositif selon la revendication 1 ou 2, **caractérisé en ce que** le composant de protection (3) est disposé dans ou sur un élément mis en forme correspondant de l'impédeur (1).

4. Dispositif selon l'une des revendications précédentes, **caractérisé en ce que** le composant de protection (3) est positionné directement sur une extrémité extérieure de l'impédeur (1) et s'étend au moins par zones le long de l'impédeur (1) et parallèlement ou sous un angle (β) par rapport à l'axe longitudinal (5) de celui-ci.

5. Dispositif selon l'une des revendications précédentes, **caractérisé en ce que** l'impédeur (1) se compose d'un seul élément d'impédeur ou d'un impédeur (1) segmenté en plusieurs parties.

6. Dispositif selon l'une des revendications précédentes, **caractérisé en ce que** le composant de protection (3) se compose d'une ou plusieurs pièces.

7. Dispositif selon l'une des revendications précédentes, **caractérisé en ce que** l'impédeur (1) se compose au moins en partie d'un composite fait de matériaux magnétiques doux sous forme de particules ou de plaquettes et d'un ou plusieurs polymères.

8. Dispositif selon l'une des revendications précédentes, **caractérisé en ce que** l'impédeur (1) comprend au moins un alésage de refroidissement traversant (4) qui peut être parcouru par un fluide de refroidissement liquide ou gazeux.

9. Dispositif selon la revendication 7, **caractérisé en ce que** l'impédeur (1) peut être refroidi au moyen de fluide de refroidissement disposé entre le profilé semi-fini (R) et l'impédeur (1), lequel impédeur (1) est conçu comme un impédeur à circulation ou comme un impédeur à reflux de telle sorte que, comme impédeur à circulation, un fluide de refroidissement soit guidé sur l'extérieur et/ou l'intérieur le long de l'impédeur (1) et, comme système d'impédeur à reflux, un fluide de refroidissement soit guidé le long de la face extérieure dans le sens du process et ramené par l'intérieur de l'impédeur (1) ou guidé dans le sens du process par l'intérieur de l'impédeur (1) et ramené le long de la face extérieure.

10. Dispositif selon l'une des revendications précédentes, **caractérisé en ce qu'**il présente des moyens pour modifier l'angle d'inclinaison α de l'impédeur (1) par rapport à l'axe longitudinal (6) du profilé semi-fini (R).

11. Dispositif selon l'une des revendications précédentes, **caractérisé en ce que** l'absence de l'enveloppe de protection augmente le volume de l'impédeur, les dimensions extérieures essentielles de l'impédeur (1) présentant un écart de s ≤ 2 mm par rapport aux dimensions intérieures des profilés semi-finis (R) pour des profilés semi-finis (R) ayant des dimensions intérieures inférieures à 30 mm et un écart de s ≤ 3 mm par rapport aux dimensions intérieures des profilés semi-finis (R) pour des profilés semi-finis (R) ayant des dimensions intérieures supérieures à 30 mm (R).
